# EUROPÄISCHE PATENTSCHRIFT

(11) **EP 3 426 094 B1**
(45) Veröffentlichungstag und Bekanntmachung des Hinweises auf die Patenterteilung: **04.11.2020**
(21) Anmeldenummer: 16725375.6
(22) Anmeldetag: 11.03.2016
(51) Int. Cl.: A47C 7/50

(54) **SITZMÖBELCHASSIS MIT EINER EIN- UND AUSFAHRBAREN FUSSSTÜTZE**
SEAT FURNITURE CHASSIS WITH A RETRACTABLE AND EXTENDABLE FOOT SUPPORT
CHÂSSIS DE SIÈGE COMPORTANT UN REPOSE-PIEDS RÉTRACTABLE ET DÉPLOYABLE

(43) Veröffentlichungstag der Anmeldung: 16.01.2019
(73) Patentinhaber: Innotec Motion GmbH, 59558 Lippstadt (DE)
(72) Erfinder: MACKERT, Michael, 59602 Rüthen (DE)
(74) Vertreter: Schäperklaus, Jochen
(86) Internationale Anmeldenummer: PCT/EP2016/055464
(87) Internationale Veröffentlichungsnummer: WO 2017/153004

(56) Entgegenhaltungen:
- WO-A1-2016/142530
- DE-A1-102009 051 576
- JP-A- S6 443 210

## Beschreibung

Die vorliegende Erfindung betrifft ein Sitzmöbelchassis gemäß dem Oberbegriff des ersten Anspruchs.

Als Sitzmöbelchassis werden Konstruktionen bezeichnet, die das Grundgerüst eines Sitzmöbels bilden. Auf dem Sitzmöbelchassis werden Polsterungen und Bezüge angebracht.

Aus der DE 10 2009 051 576 A1 ist ein Sitzmöbelchassis bekannt, das eine ausfahrbare und ausklappbare Fußstütze aufweist. Bei bekannten Sitzmöbelchassis werden Umsetzungsmittel verwendet, die den Drehimpuls eines Antriebsmittels in eine Ausfahr- und Ausklappbewegung der Fußstütze umsetzen. Außerdem weisen Sitzmöbelchassis häufig eine Federung für einen Sitzflächenstützrahmen auf. Am Sitzflächenstützrahmen kann ein als Sitzfläche dienendes Polster angebracht werden. Die Umsetzungsmittel und die Federung sind üblicherweise in nahe beieinander liegenden Bereichen angeordnet. Diese Anordnung steht einer Verkleinerung des Bauraums für den Ein- und Ausfahrmechanismus der Fußstütze entgegen. Wenn nur vergleichsweise wenig Bauraum verwendet werden soll, damit der Ein- und Ausfahrmechanismus im eingefahrenen Zustand wenig oder gar nicht zu sehen ist, steht diesem Ziel die Anordnung der Federung entgegen.

Die DE 10 2009 051 576 A1 offenbart ein Sitzmöbelchassis mit einem Rahmen und einer Ausziehmechanik, mit der eine Beinauflage aus einer Ruhelage unter einem Sitzteil in eine Gebrauchslage vor dem Sitzteil verstellbar ist.

Der Erfindung liegt die Aufgabe zugrunde, ein Sitzmöbelchassis zu schaffen, bei dem weniger Bauraum für den Ein- und Ausfahrmechanismus der Fußstütze benötigt wird. Außerdem soll ein Sitzmöbel mit einem solchen Sitzmöbelchassis geschaffen werden. Diese Aufgabe wird durch ein Sitzmöbelchassis gemäß Anspruch 1 und durch ein Sitzmöbel gemäß Anspruch 13 gelöst. Ausführungsformen der Erfindung sind in den abhängigen Ansprüchen angegeben.

Das Sitzmöbelchassis umfasst eine ein- und ausfahrbare Bein- und/oder Fußstütze, ein Antriebsmittel, ein Ausklappmittel zur Auslösung einer Klappbewegung der Bein- und/oder Fußstütze während einer Ausfahr- und/oder Einfahrbewegung der Bein- und/oder Fußstütze und ein Translationsmittel, das dazu ausgebildet ist, durch das Antriebsmittel translatorisch bewegt zu werden und so die Ausfahr- und/oder Einfahrbewegung auszulösen. Das Antriebsmittel kann beispielsweise als Motor ausgebildet sein, der ein Drehmoment auf eine Welle überträgt. Das Drehmoment kann durch Umsetzungsmittel in eine auf das Translationsmittel wirkende Kraft umgesetzt werden, wodurch das Translationsmittel translatorisch bewegt wird.

Die Klappbewegung der Bein- und/oder Fußstütze ist durch eine Änderung des Abstands zwischen dem Ausklappmittel und dem Translationsmittel auslösbar. Beispielsweise kann das Ausklappmittel über einen oder mehrere Hebel so mit dem Translationsmittel oder mit einem starr mit dem Translationsmittel verbunden Bauteil, z.B. einem Schlitten, verbunden sein, dass sich der Abstand zwischen dem Ausklappmittel und dem Translationsmittel automatisch während der Ausfahr- und/oder Einfahrbewegung ändert. Der Abstand zwischen dem Ausklappmittel und dem Translationsmittel ist änderbar, indem das Führungselement während der Ausfahr- und/oder Einfahrbewegung in Richtung des Translationsmittels oder des Schlittens oder von dem Translationsmittel oder dem Schlitten weg geführt wird. Durch die Änderung des Abstands zwischen dem Führungselement und dem Translationsmittel bzw. dem Schlitten kann eine Drehung des zweiten Schenkels verursacht werden, wodurch sich der Abstand zwischen dem Translationsmittel und dem Ausklappmittel verändert.

Erfindungsgemäß weist das Sitzmöbelchassis zumindest eine Führungsschiene und zumindest ein Führungselement auf. Die Führungsschiene ist dazu ausgebildet, während der Ausfahr- und/oder Einfahrbewegung das Führungselement zu führen. Der Abstand zwischen dem Ausklappmittel und dem Translationsmittel kann durch die Führung des Führungselements mittels der Führungsschiene änderbar sein. Zu diesem Zweck kann das Führungselement beispielsweise mit dem Ausklappmittel und dem Translationsmittel oder dem Schlitten verbunden sein.
Nach einer Ausführungsform der Erfindung kann das Sitzmöbelchassis einen ersten Schenkel und einen zweiten Schenkel umfassen. Das Führungselement kann mit einem ersten Ende des ersten Schenkels verbunden sein. Die Verbindung zwischen dem Führungselement und dem ersten Ende des ersten Schenkels kann drehbar oder fest ausgebildet sein. Außerdem kann das Führungselement mit einem ersten Ende des zweiten Schenkels drehbar verbunden sein. Ein zweites Ende des ersten Schenkels, das dem ersten Ende des ersten Schenkels gegenüberliegt, kann mit dem Ausklappmittel verbunden sein. Es ist beispielsweise auch möglich, dass der erste Schenkel über ein weiteres Bauteil mit dem Ausklappmittel verbunden ist. Ein zweites Ende des zweiten Schenkels, das dem ersten Ende gegenüberliegt, kann drehbar mit dem Translationsmittel oder mit einem starr mit dem Translationsmittel verbundenen Schlitten verbunden sein. Der Schlitten wird durch das Translationsmittel bewegt und ist zu diesem Zweck starr mit dem Translationsmittel verbunden.

Durch die Verbindung des Führungselements über die Schenkel mit dem Ausklappmittel und dem Translationsmittel bzw. dem Schlitten kann eine Veränderung des Abstands zwischen dem Ausklappmittel und dem Translationsmittel während der Ausfahr- und/oder Einfahrbewegung erreicht werden. Das Führungselement kann beispielsweise durch die Führungsschiene so geführt werden, dass aufgrund der drehbaren Verbindung zwischen dem zweiten Schenkel und dem Führungselement der Abstand zwischen dem Schlitten bzw. dem Translationsmittel und dem Führungselement verändert wird.

Nach einer Ausführungsform der Erfindung kann eine Einklappbewegung der Bein- und/oder Fußstütze während der Einfahrbewegung auslösbar sein, indem das Führungselement während der Einfahrbewegung von dem Translationsmittel oder dem Schlitten weg geführt wird. Eine Ausklappbewegung der Bein- und/oder Fußstütze kann während der Ausfahrbewegung auslösbar sein, indem das Führungselement während der Ausfahrbewegung in Richtung des Translationsmittels oder des Schlittens geführt wird.

Nach einer Ausführungsform der Erfindung kann das Translationsmittel oder der Schlitten in einem seitlichen Bereich des Sitzmöbelchassis angeordnet sein. Das Führungselement und die Führungsschiene können in einem inneren Bereich des Sitzmöbelchassis angeordnet sein. Unter dem seitlichen Bereich kann dabei insbesondere ein Bereich verstanden werden, der sich in einem Randbereich des Sitzmöbelchassis von einem hinteren Ende nach vorne erstreckt. Wobei das hintere Ende das Ende des Sitzmöbelchassis das Ende ist, an dem eine Rückenlehne befestigbar ist. Der seitliche Bereich kann insbesondere der Bereich sein, der dem seitlichen Rand des Sitzmöbelchassis näher ist als der Mitte. Das Sitzmöbelchassis kann insbesondere zwei seitliche Bereiche aufweisen, die parallel zueinander verlaufen. Unter dem inneren Bereich kann insbesondere ein Bereich verstanden werden, der zwischen den beiden seitlichen Bereichen liegt.

Nach einer Ausführungsform der Erfindung kann das Sitzmöbelchassis zumindest zwei Führungselemente, zwei Führungsschienen und zwei Schlitten umfassen. Die Schlitten können jeweils in einem der seitlichen Bereiche angeordnet sein. Die Führungselemente und die Führungsschienen können jeweils zwischen einer Mitte des Sitzmöbelchassis und dem jeweiligen Schlitten angeordnet sein.

Durch die Verwendung von zwei Führungselementen, zwei Führungsschienen und zwei Schlitten wird die Stabilität des Sitzmöbelchassis, insbesondere während der Ein- und Ausfahrbewegung erhöht.

Nach einer Ausführungsform der Erfindung kann das Ausklappmittel zumindest einen Bolzen, ein Lagerelement und ein Langloch umfassen. Die Klappbewegung der Bein- und/oder Fußstütze kann durch eine translatorische Bewegung des Bolzens auslösbar sein. Der Bolzen kann mittels des Lagerelements bei dieser translatorischen Bewegung im Langloch geführt werden. Das Langloch kann beispielsweise in einem Bauteil angeordnet sein, das starr direkt oder indirekt mit dem Translationsmittel verbunden ist. An diesem Bauteil kann zumindest ein Teil der Bein- und/oder Fußstütze befestigt sein. Ein anderer Teil der Bein- und/oder Fußstütze kann mit dem Bolzen verbunden sein. Eine Relativbewegung zwischen dem Bolzen und dem Langloch kann dann durch eine geeignete Hebelumsetzung in die Klappbewegung der Bein- und/oder Fußstütze umgesetzt werden.

Nach einer Ausführungsform der Erfindung kann das Ausklappmittel ein weiteres Lagerelement umfassen, das an dem Bolzen angeordnet ist. Auf dem weiteren Lagerelement kann die Bein- und/oder Fußstütze auflegbar sein. Durch diese Verbindung zwischen der Bein- und/oder Fußstütze und dem Bolzen kann sichergestellt werden, dass bei einer Klappbewegung keine Körperteile, Tiere oder Gegenstände beschädigt werden, wenn diese der Bein- und/oder Fußstütze im Weg sind.

Nach einer Ausführungsform der Erfindung kann das Ausklappmittel ein Federelement umfassen. Das Federelement kann eine Federkraft auf die Bein- und/oder Fußstütze ausüben. Die Federkraft kann die Bein- und/oder Fußstütze gegen den Bolzen drücken. Durch das Federelement wird somit erreicht, dass die Bein- und/oder Fußstütze in Kontakt mit dem Bolzen ist. Falls während der Klappbewegung ein Körperteil, ein Tier oder ein Gegenstand mit der Bein- und/oder Fußstütze kollidiert, wirkt lediglich die Federkraft auf den Körperteil, das Tier oder den Gegenstand. So kann der dabei entstehende Schaden verringert werden.

Nach einer Ausführungsform der Erfindung kann das Sitzmöbelchassis Umsetzungsmittel umfassen, die ein vom Antriebsmittel erzeugtes Drehmoment in eine translatorisch auf das Translationsmittel wirkende Kraft umsetzen.

Nach einer Ausführungsform der Erfindung können die Umsetzungsmittel eine Gewindespindel und eine Mutter umfassen. Die Mutter kann mit dem Translationsmittel verbunden sein und auf der Gewindespindel aufgeschraubt sein. Die Gewindespindel kann durch das Antriebsmittel in Rotation versetzbar sein.

Nach einer Ausführungsform der Erfindung können die Umsetzungsmittel in einem mittleren Bereich des Sitzmöbelchassis angeordnet sein. Unter dem mittleren Bereich kann dabei insbesondere das mittlere Drittel des Sitzmöbelchassis verstanden werden, wobei sich der mittlere Bereich vom hinteren Ende des Sitzmöbelchassis nach vorne erstreckt. Es ist insbesondere möglich, dass die Umsetzungsmittel mittig angeordnet sind, sodass sie zu den beiden seitlichen Bereichen den gleichen Abstand haben.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische Perspektivansicht eines Sitzmöbelchassis nach einer Ausführungsform der Erfindung mit eingefahrener und eingeklappter Bein- und/oder Fußstütze;
- Fig. 2: eine schematische Perspektivansicht des Sitzmöbelchassis aus Fig. 1 mit der teilweise ausgefahrenen und ausgeklappten Bein- und/oder Fußstütze;
- Fig. 3: eine schematische Perspektivansicht des Sitzmöbelchassis aus Fig. 2 mit weiter ausgefahrener und ausgeklappter Bein- und/oder Fußstütze;
- Fig. 4: eine schematische Perspektivansicht des Sitzmöbelchassis aus Fig. 3 mit weiter ausgefahrener und ausgeklappter Bein- und/oder Fußstütze;
- Fig. 5: eine schematische Perspektivansicht des Sitzmöbelchassis aus Fig. 4 mit weiter ausgefahrener und ausgeklappter Bein- und/oder Fußstütze;
- Fig. 6: eine schematische Perspektivansicht des Sitzmöbelchassis aus Fig. 5 mit komplett ausgefahrener und ausgeklappter Bein- und/oder Fußstütze; und
- Fig. 7: eine schematische Perspektivansicht des Sitzmöbelchassis aus Fig. 6.

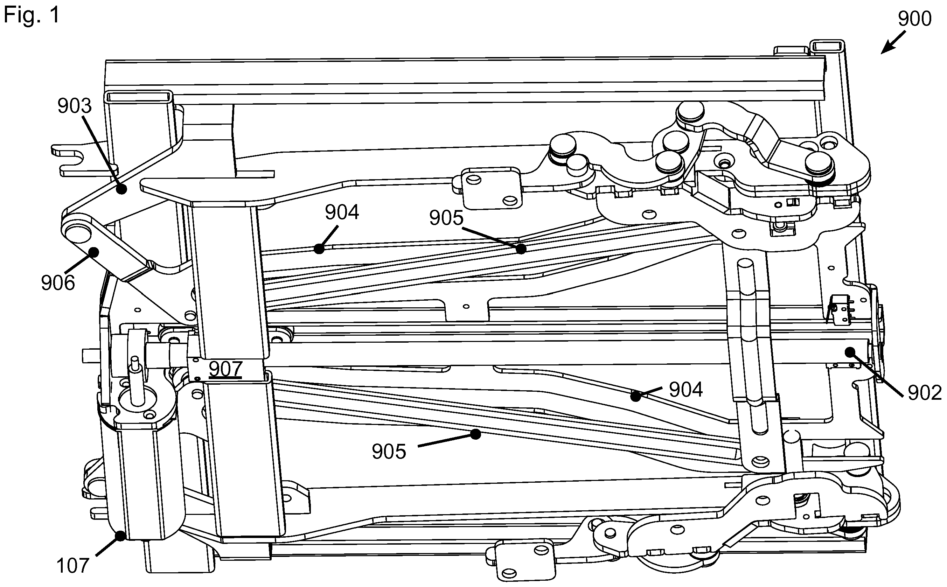

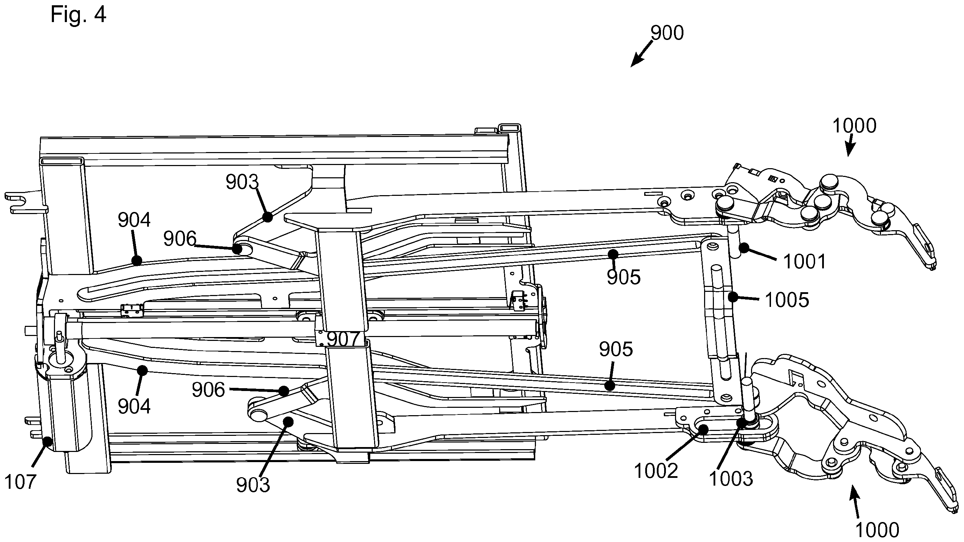

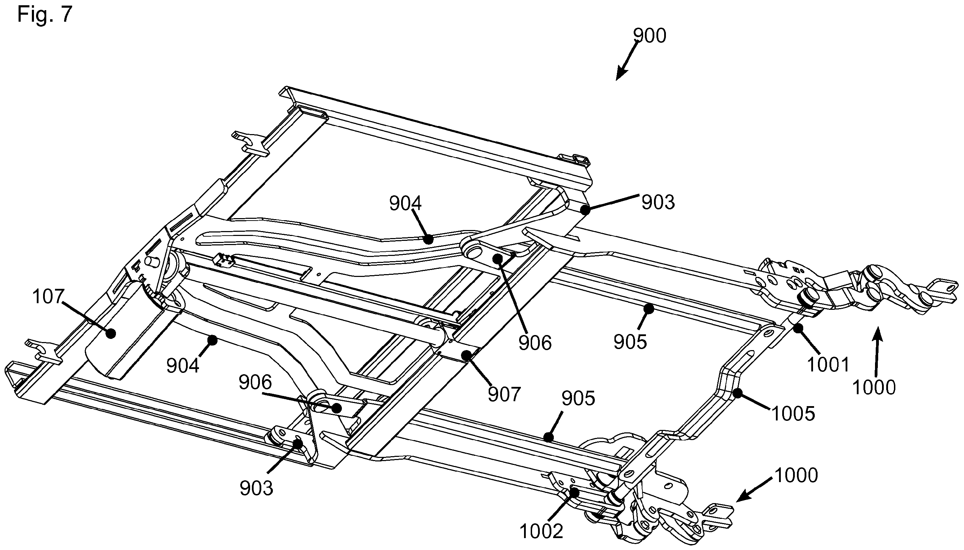

In den Figuren 1 bis 7 ist ein Sitzmöbelchassis 900 dargestellt, das ein Antriebsmittel 107, eine Gewindespindel 902, zwei Schlitten 903, zwei Führungsschienen 904, zwei erste Schenkel 905, zwei zweite Schenkel 906, ein Translationsmittel 907 und eine Bein- und/oder Fußstütze 1000 umfasst.

Das Antriebsmittel 107 ist in einem hinteren Bereich des Sitzmöbelchassis 900 angeordnet und versetzt die Gewindespindel 902 in Rotation. Das Translationsmittel 907 ist mit einer Mutter verbunden, die auf die Gewindespindel 902 aufgeschraubt ist, sodass das Translationsmittel 907 translatorisch bewegt wird, wenn die Gewindespindel 902 rotiert. Die Gewindespindel 902 ist dabei in der Mitte des Sitzmöbelchassis 900 angeordnet und verläuft vom hinteren Ende in Richtung des vorderen Endes.

Das Translationsmittel 907 ist starr mit den beiden Schlitten 903 verbunden, die in seitlichen Führungen geführt werden. Die Schlitten 903 sind jeweils drehbar mit den zweiten Schenkeln 906 verbunden. Die zweiten Schenkel 906 sind außerdem jeweils mit einem Führungselement verbunden, das in den Figuren verdeckt ist. Die beiden Führungselemente werden bei einer translatorischen Bewegung des Translationsmittels 907 in den Führungsschienen 904 geführt. Außerdem sind die Führungselemente jeweils mit ersten Enden der beiden ersten Schenkeln 905 verbunden. Zweite Enden der ersten Schenkel 905 liegen den ersten Enden gegenüber und sind durch ein Verbindungsmittel 1005 miteinander verbunden.

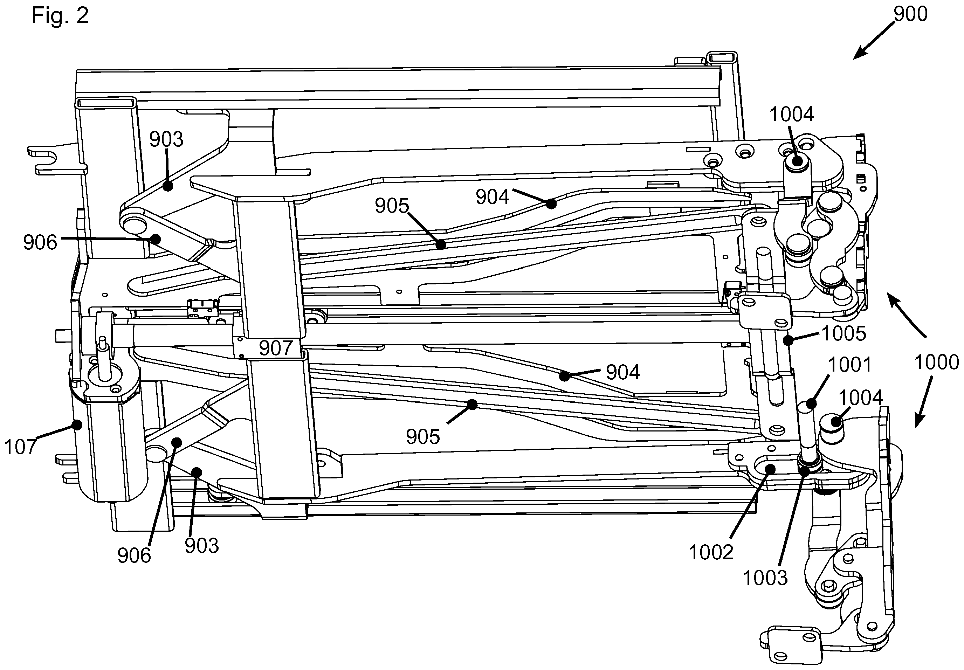

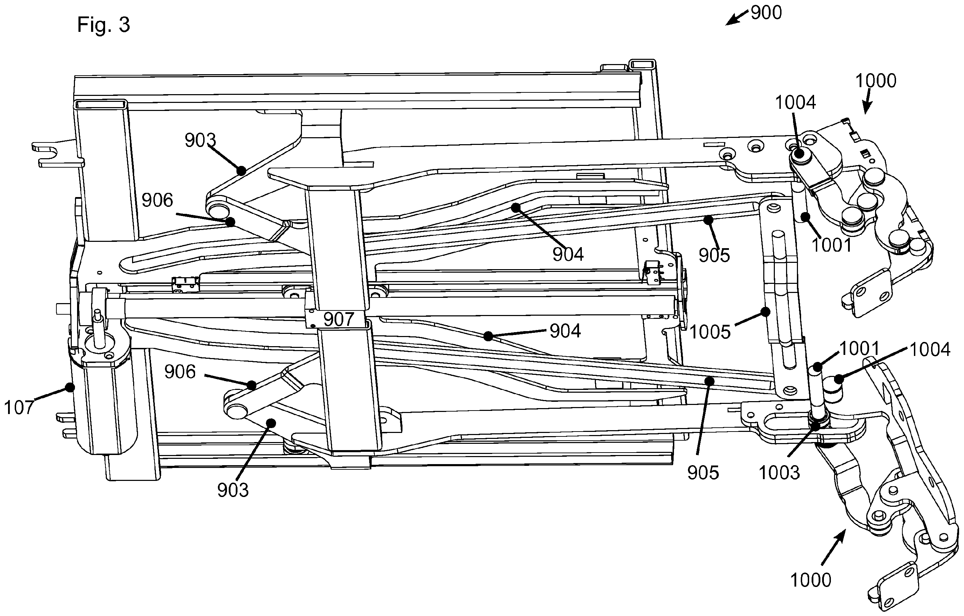

Die Führungsschienen 904 sind jeweils zwischen der Gewindespindel 902 und den seitlichen Bereichen des Sitzmöbelchassis 900 angeordnet. Die Führungsschienen 904 können in vier Abschnitte eingeteilt werden. Im ersten Abschnitt, in dem sich die Führungselemente im eingeklappten Zustand aus Figur 1 befinden, verlaufen die Führungsschienen 904 weg voneinander, sodass während des Ausklappvorgangs die Führungselemente weg von der Gewindespindel geführt werden. Im zweiten Abschnitt, der sich an den ersten Abschnitt anschließt und in dem sich die Führungselemente in den Figuren 2 und 3 befinden, verlaufen die Führungsschienen 904 annähernd parallel zur Gewindespindel 902. An den zweiten Abschnitt schließt sich ein dritter Abschnitt an, in dem die Führungsschienen 904 wieder voneinander weg verlaufen. An den dritten Abschnitt schließt sich ein vierter Abschnitt an, in dem die Führungsschienen 904 wieder parallel zueinander verlaufen.

Die zweiteilige Bein- und/oder Fußstütze 1000 ist um eine Schwenkachse schwenkbar, die durch jeweils eine Lagerung 1004 definiert ist. Diese Lagerung 1004 ist jeweils nach oben versetzt zu einem Auflagepunkt der Bein- und/oder Fußstütze auf einem Lagerelement 1003 angeordnet. Das Lagerelement 1003 ist mit einem Bolzen 1001 verbunden. Der Bolzen 1001 liegt an dem Verbindungsmittel 1005 an. Der Bolzen 1001 wird durch ein Langloch 1002 geführt und kann durch eine Relativbewegung des Verbindungsmittels 1005 zu dem Bauteil, in dem das Langloch 1002 angeordnet ist, vor und zurück bewegt werden. Bei einer Vorwärtsbewegung des Bolzens 1001 erfolgt eine Ausklappbewegung der Bein- und/oder Fußstütze 1000 um die durch die Lagerung 1004 definierte Schwenkachse. Bei einer Rückwärtsbewegung 1001 des Bolzens erfolgt dementsprechend eine Einklappbewegung um dieselbe Schwenkachse.

Eine Relativbewegung zwischen dem Bolzen 1001 und dem Bauteil mit dem Langloch 1002 wird während einer translatorischen Bewegung des Translationsmittels 907 ausgelöst. Das Translationsmittel 907 wird während einer Einfahr- oder Ausfahrbewegung der Bein- und/oder Fußstütze 1000 translatorisch durch das Antriebsmittel 107 bewegt.

Aufgrund der starren Verbindung der Schlitten 903 mit dem Translationsmittel 907 werden auch die Schlitten 903 translatorisch bewegt. Während einer Ausfahrbewegung werden die Führungselemente durch die Führungsschienen 904 in Richtung der Schlitten 903 bewegt. Während einer Einfahrbewegung werden die Führungselemente von den Schlitten 903 weg bewegt.

Wenn die Führungselemente in Richtung der Schlitten 903 bewegt werden, werden die zweiten Schenkel 906 relativ zu den Schlitten 903 gedreht, sodass die Führungselemente durch die zweiten Schenkel 906 weiter nach vorne geschoben werden als das Translationsmittel 907. Hierdurch vergrößert sich der Abstand zwischen dem Verbindungsmittel 1005 und dem Translationsmittel 907, wodurch der Bolzen 1003 in dem Langloch 1002 nach vorne geschoben wird und die Bein- und/oder Fußstütze 1000 um die Schwenkachse 1004 ausgeklappt wird. Wenn die Führungselemente von den Schlitten 903 weg bewegt werden, werden die zweiten Schenkel 906 relativ zu den Schlitten 903 gedreht, sodass die Führungselemente durch die zweiten Schenkel 906 weiter nach hinten bewegt werden als das Translationsmittel 907. Hierdurch verringert sich der Abstand zwischen dem Verbindungsmittel 1005 und dem Translationsmittel 906, wodurch der Bolzen 1003 in dem Langloch 1002 nach hinten bewegt wird und die Bein- und/oder Fußstütze 1000 um die Schwenkachse 1004 eingeklappt wird.

Die Einklappbewegung der Bein- und/oder Fußstütze 1000 wird durch ein Federelement unterstützt, das die Bein- und/oder Fußstütze 1000 gegen das Lagerelement 1003 drückt. Durch diese Kraft wird auch der Bolzen 1001 gegen das Verbindungsmittel 1005 gedrückt. Im Gegensatz zu einer starren Verbindung hat diese Anordnung den Vorteil, dass während der Einklappbewegung nur die Federkraft auf die Bein- und/oder Fußstütze 1000 wirkt, sodass die Gefahr von Beschädigungen von Körperteilen, Tieren oder Gegenständen durch die einklappende Bein- und/oder Fußstütze 1000 verringert wird.

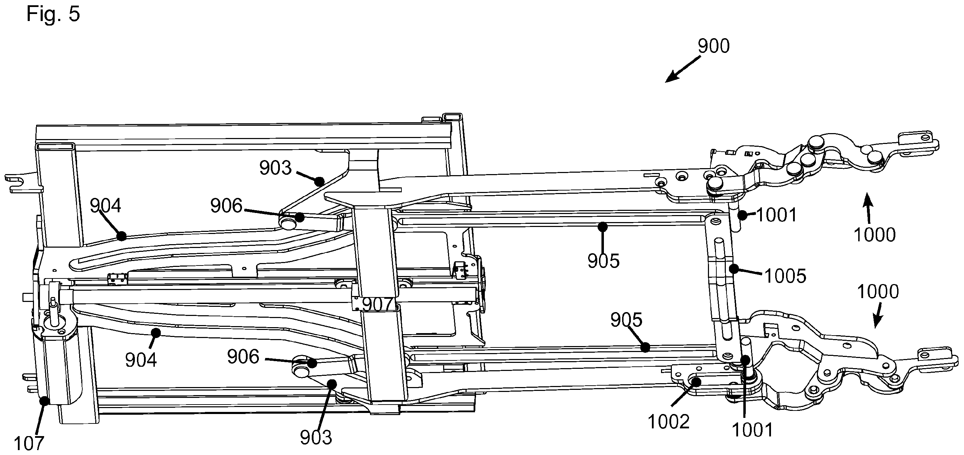

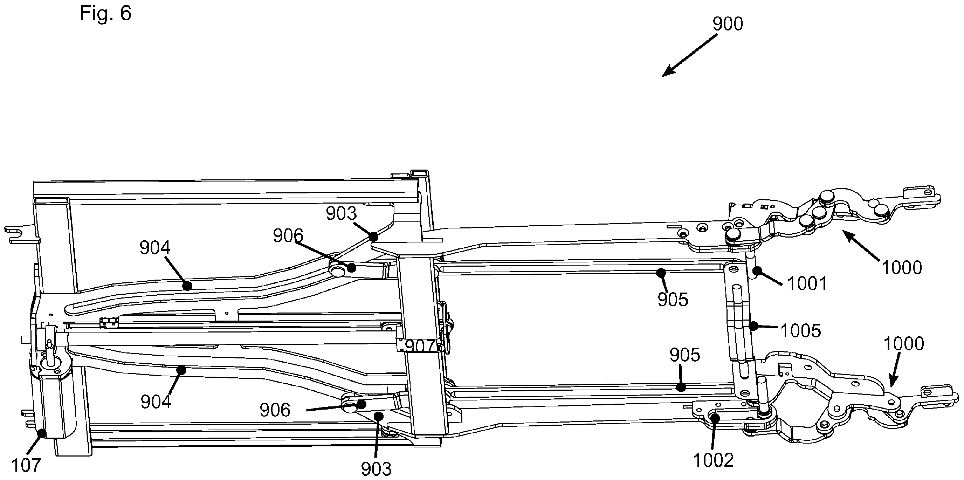

In Zusammenschau der Figuren 5 und 6 wird besonders gut deutlich, dass das Sitzmöbelchassis 900 gut geeignet für unterschiedlich große Personen ist. In Figur 5 ist die Fußstütze bereits komplett ausgeklappt, aber noch nicht komplett ausgefahren. In Figur 6 ist die Fußstütze komplett ausgeklappt und komplett ausgefahren. Die Stellung aus Figur 5 eignet sich somit für kleine Personen zur Ablage der Füße auf der Fußstütze, während sich die Stellung aus Figur 6 für größere Personen eignet. Diese wird dadurch ermöglicht, dass die Führungsschienen 904 in ihren vorderen Bereichen parallel zueinander verlaufen, sodass keine Klappbewegung der Fußstütze in diesem Abschnitt der Ausfahrbewegung erfolgt.

## Patentansprüche

1. Sitzmöbelchassis (900), umfassend eine ein- und ausfahrbare Bein- und/oder Fußstütze (1000), ein Antriebsmittel (107), ein Ausklappmittel (1001, 1002, 1003, 1004) zur Auslösung einer Klappbewegung der Bein- und/oder Fußstütze (1000) während einer Ausfahr- und/oder Einfahrbewegung der Bein- und/oder Fußstütze (1000), ein Führungselement, eine Führungsschiene (904), ein Translationsmittel (907) und einen starr mit dem Translationsmittel (907) verbundenen Schlitten (903), wobei das Translationsmittel (907) dazu ausgebildet ist, durch das Antriebsmittel (107) translatorisch bewegt zu werden und so die Ausfahr- und/oder Einfahrbewegung auszulösen, wobei die Führungsschiene (904) dazu ausgebildet ist, während der Ausfahr- und/oder Einfahrbewegung das Führungselement zu führen, wobei die Klappbewegung der Bein- und/oder Fußstütze (1000) durch eine Änderung des Abstands zwischen dem Ausklappmittel (1001, 1002, 1003, 1004) und dem Translationsmittel (907) auslösbar ist, **dadurch gekennzeichnet, dass** der Abstand zwischen dem Ausklappmittel (1001, 1002, 1003, 1004) und dem Translationsmittel (907) änderbar ist, indem das Führungselement während der Ausfahr- und/oder Einfahrbewegung in Richtung des Translationsmittels (907) oder des Schlittens (903) oder von dem Translationsmittel (907) oder dem Schlitten (903) weg geführt wird.

2. Sitzmöbelchassis (900) nach Anspruch 1, **dadurch gekennzeichnet, dass** der Abstand zwischen dem Ausklappmittel (1001, 1002, 1003, 1004) und dem Translationsmittel (907) durch die Führung des Führungselements mittels der Führungsschiene (904) änderbar ist.

3. Sitzmöbelchassis (900) nach dem vorherigen Anspruch, **dadurch gekennzeichnet, dass** das Sitzmöbelchassis (900) einen ersten Schenkel (905) und einen zweiten Schenkel (906) umfasst, wobei das Führungselement mit einem ersten Ende des ersten Schenkels (905) verbunden ist, wobei das Führungselement mit einem ersten Ende des zweiten Schenkels (906) drehbar verbunden ist, wobei ein zweites Ende des ersten Schenkels (905), das dem ersten Ende des ersten Schenkels (905) gegenüberliegt, mit dem Ausklappmittel (1001, 1002, 1003, 1004) verbunden ist, wobei ein zweites Ende des zweiten Schenkels (906), das dem ersten Ende gegenüberliegt, drehbar mit dem Translationsmittel (907) oder mit dem Schlitten (903) verbunden ist.

4. Sitzmöbelchassis (900) nach einem der vorherigen Ansprüche, **dadurch gekennzeichnet, dass** eine Einklappbewegung der Bein- und/oder Fußstütze (1000) während der Einfahrbewegung auslösbar ist, indem das Führungselement während der Einfahrbewegung von dem Translationsmittel (907) oder dem Schlitten (903) weg geführt wird und dass eine Ausklappbewegung der Bein- und/oder Fußstütze (1000) während der Ausfahrbewegung auslösbar ist, indem das Führungselement während der Ausfahrbewegung in Richtung des Translationsmittels (907) oder des Schlittens (903) geführt wird.

5. Sitzmöbelchassis (900) nach zumindest einem der vorherigen Ansprüche, **dadurch gekennzeichnet, dass** das Translationsmittel (907) oder der Schlitten (903) in einem seitlichen Bereich des Sitzmöbelchassis (900) angeordnet ist, und dass das Führungselement und die Führungsschiene (904) in einem inneren Bereich des Sitzmöbelchassis (900) angeordnet sind.

6. Sitzmöbelchassis (900) nach zumindest einem der vorherigen Ansprüche, **dadurch gekennzeichnet, dass** das Sitzmöbelchassis (900) zumindest zwei Führungselemente, zwei Führungsschienen (904) und zwei Schlitten (903) umfasst, wobei die Schlitten (903) jeweils in einem seitlichen Bereich angeordnet sind, und wobei die Führungselemente und die Führungsschienen (904) jeweils zwischen einer Mitte des Sitzmöbelchassis (900) und dem jeweiligen Schlitten (903) angeordnet sind.

7. Sitzmöbelchassis (900) nach zumindest einem der vorherigen Ansprüche, **dadurch gekennzeichnet, dass** das Ausklappmittel (1001, 1002, 1003, 1004) zumindest einen Bolzen (1001), ein Lagerelement und ein Langloch (1002) umfasst, wobei die Klappbewegung der Bein- und/oder Fußstütze (1000) durch eine translatorische Bewegung des Bolzens (1001) auslösbar ist, wobei der Bolzen (1001) mittels des Lagerelements bei dieser translatorischen Bewegung im Langloch (1002) geführt wird.

8. Sitzmöbelchassis (900) nach dem vorherigen Anspruch, **dadurch gekennzeichnet, dass** das Ausklappmittel (1001, 1002, 1003, 1004) ein weiteres Lagerelement (1003) umfasst, das an dem Bolzen (1001) angeordnet ist, auf dem die Bein- und/oder Fußstütze (1000) auflegbar ist.

9. Sitzmöbelchassis (900) nach dem vorherigen Anspruch, **dadurch gekennzeichnet, dass** das Ausklappmittel (1001, 1002, 1003, 1004) ein Federelement umfasst, wobei das Federelement eine Federkraft auf die Bein- und/oder Fußstütze (1000) ausübt, wobei die Federkraft die Bein- und/oder Fußstütze (1000) gegen den Bolzen (1001) drückt.

10. Sitzmöbelchassis (900) nach zumindest einem der vorherigen Ansprüche, **dadurch gekennzeichnet, dass** das Sitzmöbelchassis (900) Umsetzungsmittel umfasst, die ein vom Antriebsmittel (107) erzeugtes Drehmoment in eine translatorisch auf das Translationsmittel (907) wirkende Kraft umsetzen.

11. Sitzmöbelchassis (900) nach dem vorherigen Anspruch, **dadurch gekennzeichnet, dass** die Umsetzungsmittel eine Gewindespindel (902) und eine Mutter umfassen, wobei die Mutter mit dem Translationsmittel (907) verbunden ist, wobei die Mutter auf der Gewindespindel (902) aufgeschraubt ist, und wobei die Gewindespindel (902) durch das Antriebsmittel (107) in Rotation versetzbar ist.

12. Sitzmöbelchassis (900) nach einem der beiden vorherigen Ansprüche, **dadurch gekennzeichnet, dass** die Umsetzungsmittel in einem mittleren Bereich des Sitzmöbelchassis (900) angeordnet sind.

13. Sitzmöbel, umfassend ein Sitzmöbelchassis (900) nach zumindest einem der vorherigen Ansprüche.

## Claims

1. Seating furniture chassis (900), comprising a retractable and extendable leg- and/or foot-rest (1000), a drive means (107), a fold-out means (1001, 1002, 1003, 1004) for triggering a folding movement of the leg- and/or foot-rest (1000) during an extending and/or retracting movement of the leg- and/or foot-rest (1000), a guide element, a guide rail (904), a translation means (907) and a carriage (903) that is rigidly connected to the translation means (907), the translation means (907) being configured to be moved translationally by the drive means (107) and thus trigger the extending and/or retracting movement, the guide rail (904) being configured to guide the guide element during the extending and/or retracting movement, wherein the folding movement of the leg- and/or foot-rest (1000) can be triggered by a change in the distance between the fold-out means (1001, 1002, 1003, 1004) and the translation means (907), **characterised in that** the distance between the fold-out means (1001, 1002, 1003, 1004) and the translation means (907) can be changed, by the guide elements being guided during the extending and/or retracting movement towards the translation means (907) or the carriage (903) or away from the translation means (907) or the carriage (903).

2. Seating furniture chassis (900) according to claim 1, **characterised in that** the distance between the fold-out means (1001, 1002, 1003, 1004) and the translation means (907) can be changed by guiding the guide element by means of the guide rail (904).

3. Seating furniture chassis (900) according to the preceding claim, **characterised in that** the seating furniture chassis (900) comprises a first leg (905) and a second leg (906), the guide element being connected to a first end of the first leg (905), the guide element being rotatably connected to a first end of the second leg (906), a second end of the first leg (905), that is opposite the first end of the first leg (905), being connected to the fold-out means (1001, 1002, 1003, 1004), a second end of the second leg (906), that is opposite the first end, being rotatably connected to the translation means (907) or to the carriage (903).

4. Seating furniture chassis (900) according to any of the preceding claims, **characterised in that** a folding-in movement of the leg- and/or foot-rest (1000) can be triggered during the retracting movement by guiding the guide element away from the translation means (907) or the carriage (903) during the retracting movement, and **in that** a folding-out movement of the leg- and/or foot-rest (1000) can be triggered during the extending movement by guiding the guide element towards the translation means (907) or the carriage (903) during the extending movement.

5. Seating furniture chassis (900) according to at least one of the preceding claims, **characterised in that** the translation means (907) or the carriage (903) is arranged in a lateral region of the seating furniture chassis (900), and **in that** the guide element and the guide rail (904) are arranged in an inner region of the seating furniture chassis (900).

6. Seating furniture chassis (900) according to at least one of the preceding claims, **characterised in that** the seating furniture chassis (900) comprises at least two guide elements, two guide rails (904), and two carriages (903), the carriages (903) each being arranged in a lateral region, and the guide elements and guide rails (904) are each arranged between a centre of the seating furniture chassis (900) and the respective carriage (903).

7. Seating furniture chassis (900) according to at least one of the preceding claims, **characterised in that** the fold-out means (1001, 1002, 1003, 1004) comprise at least one bolt (1001), a bearing element, and a slot (1002), wherein the folding movement of the leg- and/or foot-rest (1000) can be triggered by a translational movement of the bolt (1001), wherein during this translational movement the bolt (1001) is guided in the slot (1002) by means of the bearing element.

8. Seating furniture chassis (900) according to the preceding claim, **characterised in that** the fold-out means (1001, 1002, 1003, 1004) comprise an additional bearing element (1003) that is arranged on the bolt (1001) and on which the leg- and/or foot-rest (1000) can be placed.

9. Seating furniture chassis (900) according to the preceding claim, **characterised in that** the fold-out means (1001, 1002, 1003, 1004) comprise a spring element, the spring element exerting a spring force on the leg- and/or foot-rest (1000), the spring force pressing the leg- and/or foot-rest (1000) against the bolt (1001).

10. Seating furniture chassis (900) according to at least one of the preceding claims, **characterised in that** the seating furniture chassis (900) comprises conversion means that convert a torque generated by the drive means (107) into a force that acts translationally on the translation means (907).

11. Seating furniture chassis (900) according to the preceding claim, **characterised in that** the conversion means comprise a threaded spindle (902) and a nut, wherein the nut is connected to the translation means (907), the nut is screwed onto the threaded spindle (902), and the threaded spindle (902) can be set in rotation by the drive means (107).

12. Seating furniture chassis (900) according to any one of the two preceding claims, **characterised in that** the conversion means are arranged in a central region of the seating furniture chassis (900).

13. Seating furniture, comprising a seating furniture chassis (900) according to at least one of the preceding claims.

## Revendications

1. Châssis de meuble à assise (900), comprenant un repose-jambe et/ou un repose-pied (1000) rétractable et extensible, un moyen d'entraînement (107), un moyen d'ouverture (1001, 1002, 1003, 1004) permettant de déclencher un mouvement de bascule du repose-jambe et/ou du repose-pied (1000) lors d'un mouvement d'extension et/ou de rétraction du repose-jambe et/ou du repose-pied (1000), un élément de guidage, un rail de guidage (904), un moyen de translation (907) et un chariot (903) relié de manière solidaire au moyen de translation (907), dans lequel le moyen de translation (907) est réalisé de manière à être déplacé en translation grâce au moyen d'entraînement (107) et déclencher ainsi le mouvement d'extension et/ou de rétraction, dans lequel le rail de guidage (904) est réalisé de manière à guider l'élément de guidage pendant le mouvement d'extension et/ou de rétraction, dans lequel le mouvement de bascule du repose-jambe et/ou du repose-pied (1000) peut être déclenché grâce à une modification de la distance entre le moyen d'ouverture (1001, 1002, 1003, 1004) et le moyen de translation (907), **caractérisé en ce que** la distance entre le moyen d'ouverture (1001, 1002, 1003, 1004) et le moyen de translation (907) peut être modifiée en guidant l'élément de guidage, pendant le mouvement d'extension et/ou de rétraction, en direction du moyen de translation (907) ou du chariot (903) ou dans une direction l'éloignant du moyen de translation (907) ou du chariot (903).

2. Châssis de meuble à assise (900) selon la revendication 1, **caractérisé en ce que** la distance entre le moyen d'ouverture (1001, 1002, 1003, 1004) et le moyen de translation (907) peut être modifiée grâce au guidage de l'élément de guidage au moyen du rail de guidage (904).

3. Châssis de meuble à assise (900) selon la revendication précédente, **caractérisé en ce que** le châssis de meuble à assise (900) comprend un premier bras (905) et un second bras (906), dans lequel l'élément de guidage est relié à une première extrémité du premier bras (905), dans lequel l'élément de guidage est relié rotatif à une première extrémité du second bras (906), dans lequel une seconde extrémité du premier bras (905), ladite seconde extrémité étant opposée à la première extrémité du premier bras (905), est reliée au moyen d'ouverture (1001, 1002, 1003, 1004), dans lequel une seconde extrémité du second bras (906), ladite seconde extrémité étant opposée à la première extrémité, est reliée rotative au moyen de translation (907) ou au chariot (903).

4. Châssis de meuble à assise (900) selon l'une quelconque des revendications précédentes, **caractérisé en ce qu'**un mouvement de fermeture du repose-jambe et/ou du repose-pied (1000) peut être déclenché pendant le mouvement de rétraction en guidant l'élément de guidage, pendant le mouvement de rétraction, dans une direction l'éloignant du moyen de translation (907) ou du chariot (903), et **en ce qu'**un mouvement d'ouverture du repose-jambe et/ou du repose-pied (1000) peut être déclenché pendant le mouvement d'extension en guidant l'élément de guidage, pendant le mouvement d'extension, en direction du moyen de translation (907) ou du chariot (903).

5. Châssis de meuble à assise (900) selon au moins l'une quelconque des revendications précédentes, **caractérisé en ce que** le moyen de translation (907) ou le chariot (903) est agencé dans une région latérale du châssis de meuble à assise (900), et **en ce que** l'élément de guidage et le rail de guidage (904) sont agencés dans une région intérieure du châssis de meuble à assise (900).

6. Châssis de meuble à assise (900) selon au moins l'une quelconque des revendications précédentes, **caractérisé en ce que** le châssis de meuble à assise (900) comprend au moins deux éléments de guidage, deux rails de guidage (904) et deux chariots (903), dans lequel les chariots (903) sont agencés respectivement dans une région latérale, et dans lequel les éléments de guidage et les rails de guidage (904) sont agencés respectivement entre un centre du châssis de meuble à assise (900) et le chariot (903) respectif.

7. Châssis de meuble à assise (900) selon au moins l'une quelconque des revendications précédentes, **caractérisé en ce que** le moyen d'ouverture (1001, 1002, 1003, 1004) comprend au moins une cheville (1001), un élément formant palier et un trou allongé (1002), dans lequel le mouvement de bascule du repose-jambe et/ou du repose-pied (1000) peut être déclenché grâce à un mouvement de translation de la cheville (1001), dans lequel la cheville (1001) est guidée dans le trou allongé (1002) au moyen de l'élément formant palier lors dudit mouvement de translation.

8. Châssis de meuble à assise (900) selon la revendication précédente, **caractérisé en ce que** le moyen d'ouverture (1001, 1002, 1003, 1004) comprend un autre élément formant palier (1003) agencé au niveau de la cheville (1001) sur laquelle peut être placé le repose-jambe et/ou le repose-pied (1000).

9. Châssis de meuble à assise (900) selon la revendication précédente, **caractérisé en ce que** le moyen d'ouverture (1001, 1002, 1003, 1004) comprend un élément à ressort, dans lequel l'élément à ressort exerce une force de ressort sur le repose-jambe et/ou le repose-pied (1000), dans lequel la force de ressort presse le repose-jambe et/ou le repose-pied (1000) contre la cheville (1001).

10. Châssis de meuble à assise (900) selon au moins l'une quelconque des revendications précédentes, **caractérisé en ce que** le châssis de meuble à assise (900) comprend des moyens de conversion qui convertissent un couple généré par le moyen d'entraînement (107) en une force de translation agissant sur le moyen de translation (907).

11. Châssis de meuble à assise (900) selon la revendication précédente, **caractérisé en ce que** les moyens de conversion comprennent une broche filetée (902) et un écrou, dans lequel l'écrou est relié au moyen de translation (907), dans lequel l'écrou est vissé sur la broche filetée (902), et dans lequel la broche filetée (902) peut être mise en rotation grâce au moyen d'entraînement (107).

12. Châssis de meuble à assise (900) selon l'une quelconque des deux revendications précédentes, **caractérisé en ce que** les moyens de conversion sont agencés dans une région centrale du châssis de meuble à assise (900).

13. Meuble à assise, comprenant un châssis de meuble à assise (900) selon au moins l'une quelconque des revendications précédentes.
